# EUROPEAN PATENT APPLICATION

(11) **EP 0 628 370 A1**
(43) Date of publication of application: **14.12.1994**
(21) Application number: 94903047.2
(22) Date of filing: 24.12.1993
(51) Int. Cl.: B23K 1/00, H05K 3/34, B23K 1/008

(54) **SOLDERING METHOD AND APPARATUS**

(30) Priority: 25.12.1992 JP 346060/92; 22.10.1993 JP 264882/93
(71) Applicant: NIPPON SANSO CORPORATION, Tokyo 105 (JP); SENJU METAL INDUSTRY CO., LTD., Tokyo, 120 (JP)
(72) Inventor: KON, Shinji, Nippon Sanso Corporation, Kawasaki-shi, Kanagawa 210 (JP); ARIGA, Keiki, Nippon Sanso Corporation, Kawasaki-shi, Kanagawa 210 (JP); INAMURA, Tsutomu, Nippon Sanso Corporation, Kawasaki-shi, Kanagawa 210 (JP); SATO, Toyoyuki, Nippon Sanso Corporation, Kawasaki-shi, Kanagawa 210 (JP); OHTA, Hidetoshi, Nippon Sanso Corporation, Kawasaki-shi, Kanagawa 210 (JP); HIRAO, Akitoshi, Nippon Sanso Corporation, Kawasaki-shi, Kanagawa 210 (JP); OKUNO, Tetsuya, Senju Metal Industry Co., Ltd., Tokyo 120 (JP); IINO, Tomohiko, Senju Metal Industry Co., Ltd., Tokyo 120 (JP)
(74) Representative: ter Meer, Nicolaus, Dipl.-Chem., Dr.
(86) International application number: JP9301868
(87) International publication number: WO9414563

(57) **Abstract**

A method of carrying out soldering in an atmosphere of a mixed gas of vapor of diketone and/or vapor of carboxylic acid, and an inert gas and/or a reducing gas (exclusive of a mixed gas of vapor of carboxylic acid and an inert gas). A soldering apparatus is provided with a soldering furnace (10), a path (20) for supplying an inert gas to the soldering furnace (10), a path (40) for supplying a reducing gas to the same, a path (60) for supplying vapor of diketone and/or vapor of carboxylic acid to the same, and first and second mixers (80, 81) for mixing the vapor of diketone and/or the vapor of carboxylic acid, with an inert gas and/or a reducing gas therein.

## Description

### TECHNICAL FIELD

This invention relates to a soldering method and an apparatus employed therefor, more particularly to a method of carrying out soldering in an active atmosphere and an apparatus employed therefor.

### BACKGROUND ART

In order to carry out soldering neatly, it is important that the surface of the base-metal (material to be soldered) is clean at the time that the solder is fused. For such reason, the surface of the base-metal is generally purified (activated) using a flux. The soldering methods employing such flux are roughly divided into a step of applying a flux onto the base-metal at the portions to be soldered, a step of covering the to-be-soldered portions with the flux under activation of the surface of the base-metal with heating, so as to maintain said portions in the activated state, a step of fusing the solder to wet and spread the solder onto the activated base-metal surface, and a step of cooling the solder to be solidified and adhere the solder onto the base-metal.

Some of the flux employed in the above method vaporizes because of the heat of soldering applied thereto, but some remains at the soldered portions. If the residual flux is left as such, it reacts with the moisture (humidity) in air to cause corrosion of the soldered portions or decrease in the insulation resistance thereof, leading to troubles such as deterioration in the functions of electronic appliances.

Accordingly, in the electronic appliances etc. where reliability is of great account, cleaning for removing the flux is carried out after soldering. Meanwhile, the flux typically includes, for example, a rosin incorporated with an activating agent such as an amine halide, and Freon and trichlene exhibit excellent effects as the solvents for removing it. However, use of these solvents are more and more regulated, since they destroy the ozone layer surrounding the earth or contaminate the underground water.

Under such circumstances, cleaning method not using such solvent is recently studied in the soldering factory of electronic appliances, and substitute cleaners such as water-soluble detergents and alcohols have been developed. However, these substitute cleaners involve a disadvantage in that the treatment of the substitute detergents after cleaning of the flux requires a tremendous cost. Thus, a soldering method not using such flux which must be washed off and an apparatus therefor have been desired to be developed.

Therefore, it is an objective of the present invention to provide a soldering method which can activate to-be-soldered portions utilizing an atmospheric gas, and using no flux and which requires no cleaning procedure after soldering, as well as, an apparatus employed therefor.

### DISCLOSURE OF THE INVENTION

The method of the invention comprises carrying out soldering in an atmosphere of a gaseous mixture of a diketone vapor and/or a carboxylic acid vapor and an inert gas and/or a reducing gas (provided the gaseous mixture of a carboxylic acid vapor and an inert gas is excluded).

The apparatus of the invention comprises a soldering furnace in which soldering is carried out in an atmosphere of a gaseous mixture of a diketone vapor and/or a carboxylic acid vapor, and an inert gas and/or a reducing gas (provided that the gaseous mixture of a carboxylic acid vapor and an inert gas is excluded); a passage for supplying the diketone and/or carboxylic acid to the soldering furnace; and a passage for supplying the inert gas and/or reducing gas to the soldering furnace.

The gaseous mixture employable according to the present invention is any of a gaseous mixture of a diketone vapor and an inert gas; a gaseous mixture of a diketone vapor, an inert gas and a carboxylic acid vapor; a gaseous mixture of a diketone vapor, an inert gas and a reducing gas; a gaseous mixture of a diketone vapor, an inert gas, a carboxylic acid vapor and a reducing gas; a gaseous mixture of a diketone vapor and a reducing gas; a gaseous mixture of a diketone vapor, a carboxylic acid vapor and a reducing gas; a gaseous mixture of a carboxylic acid vapor and a reducing gas; and a gaseous mixture of a carboxylic acid vapor, a reducing gas and an inert gas.

The diketone employable according to the present invention is at least one of diacetyl (CH₃COCOCH₃; b.p. 87°C), acetylacetone (CH₃COCH₂COCH₃; b.p. 140.5°C) and acetonylacetone (CH₃COCH₂CH₂COCH₃; b.p. 191.4°C).

The carboxylic acid employable according to the present invention is at least one of formic acid (HCOOH; b.p. 101°C), acetic acid (CH₃COOH; b.p. 119°C), propionic acid (CH₃(CH₂)COOH; b.p. 141°C), butyric acid (CH₃(CH₂)₂COOH; b.p. 164°C), valeric acid (CH₃(CH₂)₃COOH; b.p. 186°C), caproic acid (CH₃(CH₂)₄COOH; b.p. 205°C), enanthic acid (CH₃(CH₂)₅COOH; b.p. 233°C), caprylic acid (CH₃(CH₂)₆COOH; b.p. 239°C), pelargonic acid (CH₃(CH₂)₇COOH; b.p. 253°C), oxalic acid ((HCOOH)₂; b.p. 157°C (sublimed)), malonic acid (HOOC(CH₂)COOH; b.p. 140°C), succinic acid (HOOC(CH₂)COOH; b.p. 235°C (sublimed)), acrylic acid (CH₂CHCOOH; b.p. 141°C), salicylic acid (C₆H₄(OH)COOH; b.p. 211°C (sublimed)) and lactic acid (CH₃CH(OH)COOH; b.p. 119°C).

The inert gas employable according to the present invention is at least one of nitrogen, carbon dioxide, argon and helium.

The reducing gas employable according to the present invention is at least one of hydrogen, carbon monoxide and ammonia.

The diketone vapor employable according to the present invention can be mixed with the inert gas, the reducing gas or the mixture of the reducing gas and the inert gas in accordance with any of the following manners:
(1) any of these gases is bubbled into the diketone liquid;
(2) the diketone liquid is introduced into any of the gases and evaporated;
(3) the diketone liquid is evaporated by introducing it into the soldering furnace in the atmosphere of any of the gases;
(4) the diketone vapor is allowed to be condensed on a base-metal to form a liquid film or dew drops thereof, and the resulting base-metal having the diketone condensed thereon is heated in the high temperature zone of the soldering furnace in the atmosphere of any of the gases to effect reevaporation of the diketone; and
(5) the diketone liquid is introduced into the soldering furnace in the atmosphere of any of the gases to form a liquid film or dew drops thereof on the base-metal, followed by evaporation of the diketone.

The carboxylic acid vapor employable according to the present invention can be mixed with the reducing gas or the gaseous mixture of the reducing gas and the inert gas in accordance with any of the following manners:
(1) any of the gases is bubbled into the carboxylic acid liquid;
(2) the carboxylic acid liquid is introduced into any of the gases and evaporated;
(3) the carboxylic acid liquid is evaporated by introducing it into the soldering furnace in the atmosphere of any of the gases;
(4) the carboxylic acid vapor is allowed to be condensed on a base-metal to form a liquid film or dew drops thereof, and the resulting base-metal having the carboxylic acid vapor condensed thereon is heated in the high temperature zone of the soldering furnace in the atmosphere of any of the gases to effect reevaporation of the carboxylic acid; and
(5) the carboxylic acid liquid is introduced into the atmosphere of any of the gases in the soldering furnace to form a liquid film or dew drops thereof on the base-metal, followed by evaporation.

The mixed vapor of the diketone and the carboxylic acid employable according to the present invention can be mixed with the inert gas, the reducing gas or the gaseous mixture of the reducing gas and the inert gas in accordance with any of the following manners:
(1) any of the gases is bubbled into the diketone liquid and the carboxylic acid liquid;
(2) the diketone liquid and the carboxylic acid liquid are introduced into any of the gases and evaporated;
(3) the diketone liquid and the carboxylic acid liquid are introduced into the soldering furnace in the atmosphere of any of the gases and evaporated;
(4) the diketone liquid and the carboxylic acid are introduced into the soldering furnace in the atmosphere of any of the gases to form a liquid film or dew drops on the base-metal, followed by evaporation;
   the diketone liquid and the carboxylic acid liquid in (1) to (4) may be separated or mixed;
(5) a mixed vapor of the diketone and the carboxylic acid is allowed to be condensed on a base-metal to form a liquid film or dew drops thereof, and the resulting base-metal having the mixed vapor of the diketone and the carboxylic acid condensed thereon is heated in the high temperature zone of the soldering furnace in the atmosphere of any of the gases to effect reevaporation; and
(6) the diketone vapor is allowed to be condensed on a base-metal to form a liquid film or dew drops thereof, and the resulting base-metal is heated in the high temperature zone of the soldering furnace in the atmosphere of any of the gases and the carboxylic acid vapor to effect reevaporation.

In (6), the carboxylic acid vapor can be mixed with the inert gas, the reducing gas or the mixture of the reducing gas and the inert gas in accordance with any of the following manners:
(1) any of the gases is bubbled into the carboxylic acid liquid;
(2) the carboxylic acid liquid is introduced into any of the gases and evaporated; and
(3) the carboxylic acid liquid is introduced into the soldering furnace in the atmosphere of any of the gases and evaporated.

Formation of the diketone liquid film or dew drops on the base-metal in the present invention can be carried out in accordance with any of the following manners:
(1) the diketone vapor is heated at least to the temperature at the inlet of the soldering furnace or at least to the temperature of the base-metal before introduction into the soldering furnace, and it is fed to the soldering furnace; and
(2) the diketone vapor is mixed into any one of the inert gas, the reducing gas or the mixture of the reducing gas and the inert gas at least of the saturated vapor pressure at the temperature at the inlet of the soldering furnace or the temperature of the base-metal before introduction into the soldering furnace, and the resulting mixture is fed to the soldering furnace.

Formation of the carboxylic acid liquid film or dew drops on the base-metal in the present invention can be carried out in accordance with any of the following manners:
(1) the carboxylic acid vapor is heated at least to the temperature at the inlet of the soldering furnace or at least to the temperature of the base-metal before introduction into the soldering furnace, and it is fed to the soldering furnace; and
(2) the carboxylic acid vapor is mixed into any one of the inert gas, the reducing gas or the mixture of the reducing gas and the inert gas at least of the saturated vapor pressure at the temperature at the inlet of the soldering furnace or the temperature of the base-metal before introduction into the soldering furnace, and the resulting mixture is fed to the soldering furnace.

Formation of the liquid film or dew drops of the mixture of the diketone and the carboxylic acid on the base-metal in the present invention can be carried out in accordance with any of the following manners:
(1) a mixed vapor of the diketone and the carboxylic acid is heated at least to the temperature at the inlet of the soldering furnace or at least to the temperature of the base-metal before introduction into the soldering furnace, and it is fed to the soldering furnace; and
(2) the mixed vapor of the diketone and the carboxylic acid is mixed into any one of the inert gas, the reducing gas or the mixture of the reducing gas and the inert gas at least of each saturated saturated vapor pressure at the temperature at the inlet of the soldering furnace or the temperature of the base-metal before introduction into the soldering furnace, and the resulting mixture is fed to the soldering furnace.

The passage for supplying the diketone and/or carboxylic acid to the soldering furnace according to one embodiment of the invention is a passage for supplying the diketone and/or carboxylic acid in the liquid state into the soldering furnace.

The passage for supplying the diketone and/or carboxylic acid to the soldering furnace according to another embodiment of the invention is provided with a means for allowing the diketone and/or carboxylic acid to be condensed to form a liquid film or dew drops thereof on a base-metal.

The means for forming the liquid film or dew drops is a nozzle for spraying the diketone and/or carboxylic acid or a bubbling unit therefor.

The passage for supplying the diketone and/or carboxylic acid to the soldering furnace according to another embodiment of the invention is provided with a means for evaporating the diketone and/or carboxylic acid.

The means for evaporating the diketone according to one embodiment of the invention is a diketone bubbling tank connected to the passage which supplies any of the inert gas, the reducing gas and the gaseous mixture of the reducing gas and the inert gas to the soldering furnace.

The means for evaporating the diketone according to another embodiment of the invention is a mixer, which is connected to the passage for supplying any of the inert gas, reducing gas and the gaseous mixture of the reducing gas and the inert gas to the soldering furnace, and which carries out mixing of the diketone with the gas by heating the diketone liquid introduced thereto to effect evaporation thereof.

The means for evaporating the carboxylic acid according to one embodiment of the invention is a carboxylic acid bubbling tank connected to the passage for supplying either the reducing gas or the gaseous mixture of the reducing gas and the inert gas to the soldering furnace.

The means for evaporating the carboxylic acid according to another embodiment of the invention is a mixer, which is connected to the passage for supplying either the reducing gas or the gaseous mixture of the reducing gas and the inert gas to the soldering furnace, and which carries out mixing of the carboxylic acid with the gas by heating the carboxylic acid liquid introduced thereto to effect evaporation thereof.

The means for evaporating the diketone and the carboxylic acid according to one embodiment of the invention comprises a liquid diketone bubbling tank and a liquid carboxylic acid bubbling tank, or is a bubbling tank for the mixture of the diketone liquid and the carboxylic acid liquid, which is connected to the passage for supplying any of the inert gas, the reducing gas and the gaseous mixture of the reducing gas and the inert gas to the soldering furnace.

The means for evaporating the diketone and the carboxylic acid according to another embodiment of the invention is a mixer, which is connected to the passage for supplying any of the inert gas, the reducing gas and the gaseous mixture of the reducing gas and the inert gas to the soldering - furnace, and which carries out mixing of the diketone and the carboxylic acid with the gas by heating the diketone liquid and the carboxylic acid liquid introduced thereto to effect evaporation thereof.

The mixer may comprise the diketone mixer and the carboxylic acid mixer, or of one mixer to which the diketone introducing passage and the carboxylic acid introducing passage are connected, or of one mixer to which a passage for introducing the mixture of the diketone liquid and the carboxylic acid liquid is connected.

The conditions for the atmospheric gas so as to get rid of the cleaning procedure after soldering are that the atmospheric gas should have a nature of reducing the oxide film on the surface of the base-metal and that of the solder, and that the atmospheric gas components should not penetrate into the solder or the base-metal during soldering, or if penetrated they should not cause reduction in the insulation resistance or formation of corroded matters.

In the examination of the composition of the atmospheric gas which satisfies these conditions, a diketone vapor and/or a carboxylic acid vapor which retains reducing properties at the soldering temperature was found to be suitable.

If a diketone vapor is to be employed, the diketone vapor is preferably diluted with an inert gas so as to simplify the apparatus. Since the diketone which is expensive is diluted according to this method, it is economical, and also the safety in handling the combustible diketone vapor can be improved.

However, the diketone vapor has very low activity, so that it sometimes happens that the surface of the base-metal cannot fully be reduced if the oxygen level in the atmosphere increases, or if oxidation on said metal surface proceeds to some degree, and thus the solder cannot be wet and spread even if fused. In order to make up for the low activity of the diketone vapor, it is effective to increase the diketone vapor density, but the mere increase of the diketone vapor density in the atmosphere is not preferred from the standpoints of economy and safety.

Therefore, recommended is a method in which a liquid diketone is applied to a base-metal and evaporated in the high temperature zone in the soldering furnace so as to allow the highly dense diketone vapor to cover mainly around the to-be-soldered portions.

While a possible method of applying the diketone in the liquid state onto the base-metal is to apply a diketone solution using an applicator such as a fluxer, it is not desirable to use such applicator from the standpoint of simplification and downsizing of the soldering apparatus. Accordingly, recommended is a method in which a diketone vapor is applied in the liquid state onto the base-metal by bringing the former into contact with the base-metal or the base-metal and the solder, before heating in the soldering furnace, to be condensed partially and form dew drops thereof on the base-metal.

There is another method in which the vapor of the reducing gas and/or carboxylic acid is added so as to make up for the insufficient activity of the diketone vapor.

Addition of a carboxylic acid vapor to the gaseous mixture of a diketone vapor and an inert gas enjoys the following merits in the flow soldering.

Carboxylic acid vapors, while they have high reducing powers compared with diketone vapors, often have strong toxicity. Accordingly, the density of the carboxylic acid vapor is desirably as low as possible. However, if the carboxylic acid vapor is singly admixed to an inert gas to a low density, the oxides in the spouted solder can be reduced, but the surface of the base-metal cannot fully be reduced, resulting in the failure of wetting of the to-be-soldered portions of the printed circuit board (base-metal) with the solder.

Meanwhile, the diketone vapor is free from toxicity but has very low activity, so that the diketone vapor must be supplied at a high density to the to-be-soldered portions. The diketone in the liquid state is desirably applied onto the base-metal in view of economy and safety. However, if the oxygen level in the soldering atmosphere is relatively high (e.g. 1,000 ppm), the solder can wet and spread on the to-be-soldered portions of the printed circuit board, but the surface of the solder deposited on the printed circuit board will insufficiently be reduced, leading to high surface tension of the solder and form solder projections on the under surface of the printed circuit board.

Thus, a combination of the diketone vapor and the carboxylic acid vapor is used so as to mutually make up for the demerits and carry out soldering neatly. For example, if the diketone is applied in the liquid form to the to-be-soldered portions of the printed circuit board and evaporated when the spouted solder is brought into contact with the printed circuit board so as to cover the to-be-soldered portions with the diketone vapor, and if a small amount of carboxylic acid vapor is added to the atmospheric gas, the solder can wet the to-be-soldered portions to form no solder projections, thus enabling neat soldering.

The similar effect can be exhibited if the reducing gas is admixed to the diketone vapor.

As a technique of incorporating the diketone vapor into the atmospheric gas, for example, there is employed bubbling of the reducing gas or the gaseous mixture of the reducing gas and the inert gas into the diketone liquid, or after bubbling of the inert gas into the diketone liquid, mixing said gas with a reducing gas. In these techniques, the diketone vapor density in the gaseous mixture can be increased by heating the diketone liquid to the boiling point or less.

The carboxylic acids and some of the reducing gases such as hydrogen also satisfy the conditions for the atmospheric gas so as to get rid of the cleaning after soldering.

For example, when the base-metal is of copper, copper surface can be reduced in accordance with the following chemical reactions:

2(R-COOH) + CuO = (R-COO)₂Cu + H₂O (1)

H₂ + CuO = Cu + H₂O (2)

(wherein R represents hydrogen or a hydrocarbon group).

However, when soldering is to be carried out in an atmosphere of the carboxylic acid vapor or of the reducing gas singly at 200°C, the oxide film on the base-metal cannot actually be removed fully due to its weak reducing power, and the molten solder cannot wet and spread on the base-metal surface. For example, hydrogen cannot reduce the oxide on the copper surface at a temperature of about 350°C or higher. Meanwhile, in the case of formic acid which is a monocarboxylic acid, it cannot reduce copper surface unless a very small amount of halogen component is added. Namely, if the carboxylic acid vapor or the reducing gas is employed singly, it may exhibit the effect of activating the base-metal at a high temperature, but there is a fear that application of high temperature heating of higher than 250°C gives malicious influence on the electronic parts, unfavorably.

Therefore, the interaction between the carboxylic acid vapor and the reducing gas is utilized to reduce, for example, (R-COO)₂Cu formed through the reaction of the scheme (1) into copper through the following reaction:

(R-COO)₂Cu + H₂ = 2(R-COOH) + Cu (3)

This reaction can be surmised by observing copper surface, and if the carboxylic acid vapor is singly used, the copper surface is turned green by the reaction product (R-COO)₂Cu, but the copper surface having a metallic luster can be exposed by adding hydrogen.

Namely, by using a gaseous mixture of the carboxylic acid vapor and the reducing gas or of the carboxylic acid vapor, the reducing gas and the inert gas as the soldering atmospheric gas, for example, the copper oxide on the copper surface can be reduced into copper through the reaction of the schemes (1) and (3) to activate the copper surface.

In addition to hydrogen, carbon monoxide and ammonia can suitably be used as the reducing gas.

Carbon monoxide reacts with the water formed through the reaction of the scheme (1) to form hydrogen as shown in the following scheme:

CO + H₂O = CO₂ + H₂

Meanwhile, ammonia decomposes to form hydrogen as shown in the following scheme.

2NH₃ = N₂ + 3H₂

As the diketone and the carboxylic acid, various compounds can be employed. However, those which can be gasified at the preheating temperature, i.e. a common preheating temperature of 100 to 250°C, should be selected, because the temperature in the soldering process or the soldering process itself can roughly be divided into three stages or steps (preheating of the base-metal, fusing of the solder and cooling of the base-metal and the solder), and the reduction of the base-metal surface should be started from the base-metal preheating step. Accordingly, the diketones and carboxylic acids described above are preferred.

While a diketone vapor, a gaseous mixture of a diketone vapor and a carboxylic acid vapor, a gaseous mixture of a diketone vapor and a reducing gas, a gaseous mixture of a diketone vapor, a carboxylic acid vapor and a reducing gas, or a gaseous mixture of a carboxylic acid vapor and a reducing gas can be employed as the soldering atmospheric gas according to the present invention depending on the state of the base-metal surface, these gases can more economically be diluted by incorporating thereto an inert gas. Further, safety can also be improved by decreasing the concentration of, for example, hydrogen which is a combustible gas or of the carboxylic acid having toxicity. As the inert gas employable here, those described above including nitrogen gas can be given.

Since the composition of the soldering atmospheric gas varies depending on the kind of base-metal, state of the base-metal surface, structure of the apparatus, the soldering temperature, components of the gaseous mixture and flow rate thereof, etc., experiments and the like are preferably carried out so as to decide an optimum composition case by case.

If the oxide film present on the base-metal surface is relatively thin, the concentration of the diketone vapor, carboxylic acid vapor and reducing gas are decreased to further improve safety and economy.

As described above, the diketone vapor, the carboxylic acid vapor and the reducing gas contained in the soldering atmospheric gas reduce the oxide film present on the base-metal surface and solder surface and activate them to provide excellent wettability of the base-metal with the solder, and the components of the atmospheric gas do not substantially penetrate into the solder and the base-metal to cause neither decrease in the insulation resistance nor formation of corroded matters, enabling neat soldering. Besides, since it never happens that the flux remains at the soldered portions, the cleaning step after soldering can be omitted, and the omission of the cleaning device leads to reductions in the facility cost and running cost. Further, since no solvent such as Freon is used, there if no fear of environmental pollution, and the water treatment which is required when a water-soluble detergent is employed for the cleaning becomes unnecessary, so that the installation spaces for the cleaning equipment and for the water treatment equipment can be eliminated.

### BRIEF DESCRIPTION OF THE DRAWINGS

Fig. 1 is a schematic diagram of one embodiment of the soldering apparatus employable according to the method of the present invention;
Fig. 2 is a schematic diagram showing a variation of the passage for supplying a diketone and/or a carboxylic acid in Fig. 1;
Fig. 3 is a schematic diagram showing another variation of the passage for supplying a diketone and/or a carboxylic acid in Fig. 1; and
Fig. 4 id a schematic diagram showing another variation of the passage for supplying a diketone and a carboxylic acid in Fig. 1.

### BEST MODES FOR PRACTICING THE INVENTION

Embodiments of the method and apparatus according to the present invention will be described below referring to the drawings.

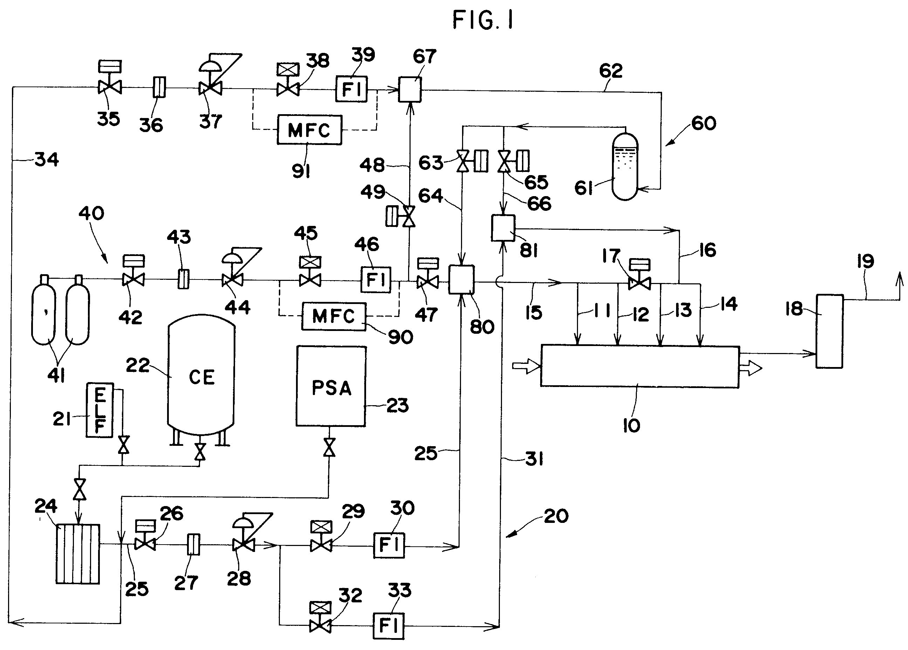

Fig. 1 shows a method and an apparatus for supplying a diketone vapor and/or a carboxylic acid vapor by means of bubbling according to one embodiment of the invention.

The apparatus shown in Fig. 1 is provided with a soldering furnace 10, a passage 20 for supplying an inert gas to the soldering furnace 10, a passage 40 for supplying a reducing gas to the soldering furnace 10, and a passage 60 for supplying a diketone vapor and/or a carboxylic acid vapor to the soldering furnace 10, as well as, a first mixer 80 and a second mixer 81 for mixing the diketone vapor and/or the carboxylic acid vapor with the inert gas and/or the reducing gas.

The inert gas supplying passage 20 is provided with one of a small liquefied gas container (ELF) 21, a liquefied gas storage tank (CE) 22 and an air separation apparatus by pressure swing adsorption (PSA) 23, as an inert gas supplying source. The small liquefied gas container 21 or the liquefied gas storage tank 22 is equipped with an evaporator 24 for evaporating the liquefied gas stored therein.

A passage 25 for supplying the inert gas from the air separation apparatus by pressure swing adsorption 23 or the evaporator 24 is connected to the first mixer 80 via a shut-off valve 26, a filter 27, a pressure-reducing valve 28, a flow-regulating valve 29 and a flow indicator 30. Another passage 31 for supplying the inert gas branching downstream the pressure-reducing valve 28 in the passage 25 for the inert gas is connected to the second mixer 81 via a flow-regulating valve 32 and a flow indicator 33.

The reducing gas supplying passage 40 connects containers 41 in which a reducing gas is charged to the first mixer 80, with a shut-off valve 42, a filter 43, a pressure-reducing valve 44, a flow-regulating valve 45, a flow indicator 46 and a shut-off valve 47 being interposed between the containers 41 and the first mixer 80. Incidentally, the flow-regulating valve 45 and the flow indicator 46 may be replaced by a mass flow controller 90 in which the former two are integrated.

The diketone vapor and/or carboxylic acid vapor supplying passage 60 comprises a passage 62 for supplying a bubbling gas to a diketone and/or carboxylic acid bubbling tank 61, a passage 64 which connects the bubbling tank 61 with the first mixer 80 via a shut-off valve 63, and a passage 66 which connects the bubbling tank 61 with the second mixer 81 via a shut-off valve 65.

The bubbling gas supplying passage 62 is connected to a bubbling gas mixer 67. The inert gas supplying passage 25 and the bubbling gas mixer 67 are connected via a passage 34 branching upstream the shut-off valve 26. The passage 34 is provided with a shut-off valve 35, a filter 36, a pressure-reducing valve 37, a flow-regulating valve 38 and a flow indicator 39. Incidentally, the flow-regulating valve 38 and the flow indicator 39 may be replaced by a mass flow controller 91 in which the former two are integrated.

The reducing gas supplying passage 40 and the bubbling gas mixer 67 are connected via a passage 48 branching downstream the flow indicator 46. The passage 48 is provided with a shut-off valve 49.

To the soldering furnace 10 are connected atmospheric gas introducing pipes 11,12,13,14 downstreamwise in the direction of forwarding the material to be soldered. The atmospheric gas introducing pipes 11 and 12 are connected to the first mixer 80 via a passage 15. The other atmospheric gas introducing pipes 13 and 14 are connected to the second mixer 81 via another passage 16. The atmospheric gas introducing pipe 12 and the atmospheric gas introducing pipe 13 are connected to each other via a shut-off valve 17. An exhaust passage 19 having an exhaust gas treating unit 18 is connected downstream the soldering furnace 10.

Next, the method of carrying out soldering in the gaseous mixture atmosphere of a diketone vapor, a carboxylic acid vapor, an inert gas and a reducing gas will be described referring to Fig. 1.

A liquid mixture of the diketone and the carboxylic acid is stored in the bubbling tank 61.

Meanwhile, the soldering furnace 10 is purged with the inert gas introduced through the inert gas supplying passage 20 so as to adjust the oxygen level in the furnace to a predetermined level or lower.

After confirmation that the oxygen level in the furnace has reached the predetermined level or lower, the inert gas is fed to the first mixer 80 and the second mixer 81 via the passages 25 and 31 of the inert gas supplying passage 20. The inert gas is also fed to the bubbling gas mixer 67 via the passage 34. Further, the reducing gas is fed to the first mixer 80 via the reducing gas supplying passage 40. The reducing gas is fed to the bubbling gas mixer 67 via the passage 48.

The gaseous mixture of the inert gas and the reducing gas fed to the bubbling gas mixer 67 is fed to the bubbling tank 61 to be used for bubbling through the liquid mixture of the diketone and the carboxylic acid and then fed to the first mixer 80 and the second mixer 81 via the passages 64,66, carrying the mixed vapor of the diketone and the carboxylic acid.

The gaseous mixture formed in the first mixer 80 is introduced to the soldering furnace 10 via the passage 15 and the atmospheric gas introducing pipes 11,12. The gaseous mixture formed in the second mixer 81 is introduced to the soldering furnace 10 via the passage 16 and the atmospheric gas introducing pipes 13,14. Thus, the inside of the soldering furnace 10 assumes an atmosphere of the gaseous mixture of the diketone vapor, the carboxylic acid vapor, the inert gas and the reducing gas, and soldering is carried out in the furnace in accordance with predetermined procedures.

The gas in the soldering furnace 10 is treated in the exhaust gas treating unit 18 to be a harmless gas and exhausted through the exhaust passage 19.

The composition of the atmospheric gas can suitably be designed by adjusting the flow rate of the inert gas and that of the reducing gas by the flow-regulating valves of the respective passages.

The mixed vapor of the diketone and the carboxylic acid can be increased by heating the liquid mixture of the diketone and the carboxylic acid to the boiling point or less.

Two bubbling tanks for bubbling the diketone and the carboxylic acid independently may be provided in series or parallel to obtain a mixed vapor of the diketone and the carboxylic acid.

The bubbling gas supplied to the bubbling tank 61 may be either the inert gas or the reducing gas.

The passage 15 and/or the passage 16 can be used by opening or closing the shut-off valve 17.

Either the diketone or the carboxylic acid may be stored in the bubbling tank 61.

In these cases, the inert gas supplying passage 20 or the reducing gas supplying passage 40 may be omitted, or the shut-off valve in the passage 20 or that in the passage 40 may be closed to obtain any atmosphere of a gaseous mixture of the diketone vapor and the inert gas, a gaseous mixture of the diketone vapor, the inert gas and the carboxylic acid vapor, a gaseous mixture of the diketone vapor, the inert gas and the reducing gas, a gaseous mixture of the diketone vapor and the reducing gas, a gaseous mixture of the diketone vapor, the carboxylic acid vapor and the reducing gas, a gaseous mixture of the carboxylic acid vapor and the reducing gas or a gaseous mixture of the carboxylic acid vapor, the reducing gas and the inert gas.

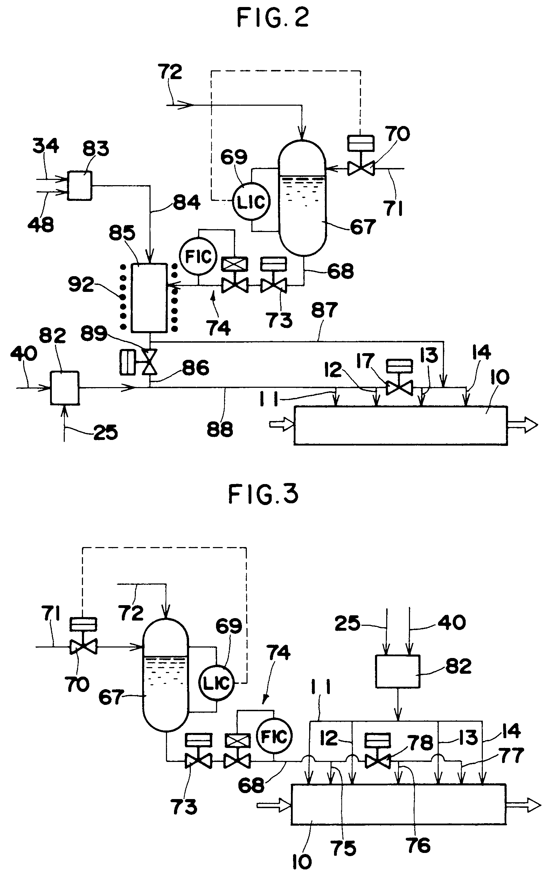

Fig. 2 shows a variation of the diketone and/or carboxylic acid supplying passage of Fig. 1.

The illustrated apparatus is provided with the soldering furnace 10, a mixer 82 to which the inert gas supplying passage 25 and the reducing gas supplying passage 40 are connected, a mixer 83 to which the inert gas supplying passage 34 and the reducing gas supplying passage 48 are connected, a container 67 in which the diketone and/or carboxylic acid liquid is stored, a mixer 85 in which the diketone and/or carboxylic acid liquid fed from the container 67 through a passage 68 is evaporated and mixed with the gaseous mixture of the inert gas and the reducing gas fed from the mixer 83 through a passage 84, and passages 86,87 for supplying the gaseous mixture formed in the mixer 85 to the soldering furnace 10.

The passage 86 is connected via a shut-off valve 89 to a passage 88 which connects the mixer 82 with the atmospheric gas introducing pipes 11,12. The passage 87 is connected to the atmospheric gas introducing pipes 13,14. The container 67 is provided with a refill passage 71 having a level gauge 69 and an extra feed valve 70, and a pressurizing passage 72 which is used as necessary. The passage 68 is provided with a shut-off valve 73 and a flow indicator/controller 74. The mixer 85 has a heater 92.

In the thus constituted apparatus, the diketone and/or carboxylic acid liquid is heated in the mixer 85 and evaporated. The resulting vapor is mixed with the mixture of the inert gas and the reducing gas, and the gaseous mixture is fed to the soldering furnace 10.

Respective containers for the diketone and carboxylic acid liquid can be provided with respect to the mixer 85, and respective mixers can be provided with respect to the diketone and carboxylic acid liquid.

The gas to be supplied to the mixer 85 may either the inert gas or the reducing gas.

Fig. 3 shows still another variation of the diketone and/or carboxylic acid supplying passage of Fig. 1.

The illustrated apparatus is of the same constitution as in Fig. 2, except that the passage 68 is directly connected to the soldering furnace 10. The passage 68 is branched into three introduction pipes 75,76,77 before connected to the soldering furnace 10. A shut-off valve 78 is interposed between the introduction pipe 75 and the introduction pipe 76. Meanwhile, the gaseous mixture of the inert gas and the reducing gas are blended in the mixer 82 in the same manner as in Fig. 2 to be introduced into the soldering furnace 10.

In the thus constituted apparatus, the diketone and/or carboxylic acid liquid is directly introduced into the soldering furnace 10 and evaporated therein to be mixed with the gaseous mixture of the inert gas and the reducing gas. In this case, the diketone and/or carboxylic acid liquid may immediately be evaporated in the furnace or it may be spayed directly onto the base-metal to form a liquid film or droplets and then evaporated.

In this apparatus, a plurality of containers for the respective components may be provided.

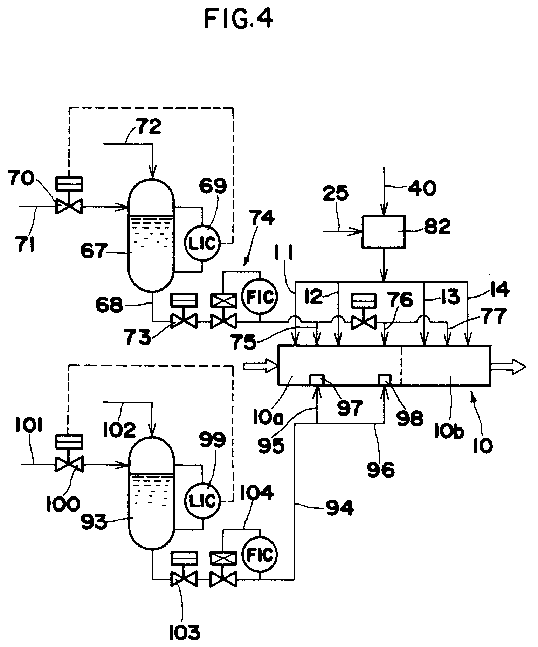

Fig. 4 shows a further variation of the diketone and carboxylic acid supplying passage of Fig. 1.

In the illustrated apparatus, the carboxylic acid liquid is stored in the container 67 in Fig. 3 and introduced to the soldering furnace 10 via the passage 68. The diketone liquid stored in the container 93 is introduced to the soldering furnace 10 via a passage 94. The passage 94 is branched into two introduction pipes 95,96, and the tip of each pipe is connected to the preheating zone 10a of the soldering furnace 10. The tips of the introduction pipes 95,96 are provided with spraying nozzles or bubbling units 97,98, respectively. The container 93 is provided with a refill passage 101 having a level gauge 99 and an extra feed valve 100, and a pressurizing passage 102 which is used as necessary. The passage 94 is provided with a shut-off valve 103 and a flow indicator/regulator 104.

In the thus constituted apparatus, the diketone liquid is directly sprayed onto the base-metal placed in the preheating zone 10a of the soldering furnace 10 through the spraying nozzles or bubbling units 97,98 to form a liquid film or droplets on the base-metal surface. The diketone liquid film or droplets are evaporated when the base-metal is transferred to the high temperature zone 10b of the soldering furnace 10 and mixed with the atmospheric gas.

In a typical bubbling method in the bubbling unit, a cylindrical drum having a multiplicity of micropores is disposed on the liquid surface of a container containing a liquid to be bubbled (the diketone or carboxylic acid), and the gas is exhausted from the inside of the rotating drum through the multiplicity of micropores to form foams on the drum surface.

Alternatively, if the diketone or the carboxylic acid is heated, before introduction into the soldering furnace 10, to the temperature at the inlet of the soldering furnace 10 or at least to the temperature of the base-metal before introduction thereof into the soldering furnace 10, the diketone vapor or carboxylic acid vapor thus formed is condensed to form a liquid film or dew drops on the base-metal surface.

Further, if the diketone or the carboxylic acid, before introduction into the soldering furnace 10, assuming at least the saturated vapor pressure at the temperature at the inlet of the soldering furnace 10 or at least at the temperature of the base-metal before introduction thereof into the soldering furnace 10 is mixed with the inert gas, the reducing gas or the mixture of the reducing gas and the inert gas, and the resulting gaseous mixture is fed to the soldering furnace 10, the diketone vapor or the carboxylic acid vapor condenses to form a liquid film or dew drops on the base-metal surface.

Examples of the present invention and a Comparative Example will now be described.

### Example 1

In a flow soldering apparatus comprising a preheater, a solder spouting unit and a cooling section, soldering tests were carried out in the atmospheric conditions shown in Table 1. Incidentally, the other conditions including the solder composition are as follows:

| | |
|---|---|
| Solder composition: | tin: 63 %, lead: 37 % |
| Soldering temperature: | 250°C |
| Substrate employed: | composite substrate |
| Substrate supplying speed: | 1 m/min |

**Table 1**

| Atmospheric condition employed | Oxygen level | State of copper surface of substrate before soldering | Result of soldering |
|---|---|---|---|
| Acetylacetone 5 % + nitrogen | <10 ppm | Lustrous | Good |
| | 100 ppm | " | Poor: unwetted |
| | <10 ppm | Slightly oxidized | Poor: unwetted |
| Acetylacetone (condensed) + nitrogen | <10 ppm | Lustrous | Good |
| | 100 ppm | " | Good |
| | 1000 ppm | " | Good |
| | 5000 ppm | " | Tolerable: solder projection formed |
| | <10 ppm | Slightly oxidized | Good |
| Acetylacetone (condensed) + formic acid 0.5 % | <10 ppm | Lustrous | Good |
| | 100 ppm | " | Good |
| | 1000 ppm | " | Good |
| | 5000 ppm | " | Good |

As shown in Table 1, if the surface of the substrate before soldering is slightly oxidized, or if the oxygen level in the atmosphere is high, the solder fails to wet the surface to be soldered.

Good soldering results were obtained by forming dew drops of acetylacetone (diketone) on the substrate even if the surface of the substrate before soldering is slightly oxidized, or if the oxygen level in the atmosphere is increased to some degree. However, if the oxygen level in the atmosphere reaches 5000 ppm, the solder deposited on the under surface of the substrate formed projections.

By adding 0.5 % of carboxylic acid vapor to the atmosphere after condensation of acetylacetone onto the substrate, the solder can wet the to-be-soldered portions of the substrate, even if the oxygen level in the atmosphere is 5000 ppm, enabling neat soldering without forming solder projections.

### Example 2

Solder rings (tin: 63 %, lead: 37 %) were placed on polished copper plates, and soldering was carried out using four kinds of atmospheric gases under the heating conditions of 200°C, 250°C and 300°C, respectively. It should be noted that the gaseous mixture containing acetylacetone was obtained by bubbling nitrogen or hydrogen into acetylacetone heated to 80°C.

**Table 2**

| | 200°C | 250°C | 300°C |
|---|---|---|---|
| Nitrogen | Poor | Poor | Poor |
| Hydrogen | Poor | Poor | Poor |
| Acetylacetone + nitrogen | Poor | Poor | Tolerable |
| Acetylacetone + hydrogen | Poor | Good | Good |

It will be apparent from Table 2 that soldering can be carried out neatly at relatively low temperatures by using a gaseous mixture of acetylacetone and hydrogen as the atmospheric gas.

### Example 3

Solder rings containing 63 % of tin and 37 % of lead were placed on polished copper plates and oxidized copper plates, and the states of the solder rings when they were heated to 200°C, 250°C and 300°C, respectively, using an atmospheric gas containing 20 % of hydrogen, 4 % of formic acid as the carboxylic acid gas and the rest being an inert gas were observed. The results are as shown in Table 3.

### Example 4

Soldering tests were carried out using polished copper plates and oxidized copper plates in the same manner as in Example 3, except that an atmospheric gas containing 40 % of, hydrogen, 4 % of acetic acid and the rest being nitrogen was used. The results are as shown in Table 3.

### Comparative Example

Soldering tests were carried out under the same conditions as in Examples 3 and 4 for the purpose of comparison, except that nitrogen only, hydrogen only, nitrogen containing 4 % of formic acid and nitrogen containing 4 % of acetic acid were used as the atmospheric gases, respectively. The results are as shown in Table 3.

**Table 3**

| | Polished copper plate | | | Oxidized copper plate | | |
|---|---|---|---|---|---|---|
| Heating temperature (°C) | 200 | 250 | 300 | 200 | 250 | 300 |
| Hydrogen: 20 %, | Good | Good | Good | Good | Good | Good |
| Formic acid: 4 % | | | | | | |
| Nitrogen: rest | | | | | | |
| Hydrogen: 40 %, | Good | Good | Good | Good | Good | Good |
| Acetic acid: 4 % | | | | | | |
| Nitrogen: rest | | | | | | |
| Nitrogen only | Poor | Poor | Poor | Poor | Poor | Poor |
| Hydrogen only | Poor | Poor | Poor | Poor | Poor | Poor |
| Nitrogen + 4 % formic acid | Tolerable | Good | Good | Poor | Tolerable | Good |
| Nitrogen + 4 % acetic acid | Poor | Tolerable | Good | Poor | Poor | Tolerable |

## Claims

1. A soldering method which comprises carrying out soldering in an atmosphere of a gaseous mixture of a diketone vapor and/or a carboxylic acid vapor, and an inert gas and/or a reducing gas (provided that the gaseous mixture of a carboxylic acid vapor and an inert gas is excluded).

2. The soldering method according to Claim 1, wherein said gaseous mixture is of a diketone vapor and an inert gas.

3. The soldering method according to Claim 1, wherein said gaseous mixture is of a diketone vapor, an inert gas and a carboxylic acid vapor.

4. The soldering method according to Claim 1, wherein said gaseous mixture is of a diketone vapor, an inert gas and a reducing gas.

5. The soldering method according to Claim 1, wherein said gaseous mixture is of a diketone vapor, an inert gas, a carboxylic acid vapor and a reducing gas.

6. The soldering method according to Claim 1, wherein said gaseous mixture is of a diketone vapor and a reducing gas.

7. The soldering method according to Claim 1, wherein said gaseous mixture is of a diketone vapor, a carboxylic acid vapor and a reducing gas.

8. The soldering method according to Claim 1, wherein said gaseous mixture is of a carboxylic acid vapor and a reducing gas.

9. The soldering method according to Claim 1, wherein said gaseous mixture is of a carboxylic acid vapor, a reducing gas and an inert gas.

10. The soldering method according to any of Claims 1 to 7, wherein said diketone is at least one of diacetyl, acetylacetone and acetonylacetone.

11. The soldering method according to any of Claims 1, 3, 5, 7, 8 and 9, wherein said carboxylic acid is at least one of formic acid, acetic acid, propionic acid, butyric acid, valeric acid, caproic acid, enanthic acid, caprylic acid, pelargonic acid, oxalic acid, malonic acid, succinic acid, acrylic acid, salicylic acid and lactic acid.

12. The soldering method according to Claim 1, wherein said diketone vapor is mixed with said inert gas, said reducing gas or the mixture of said reducing gas and said inert gas by bubbling the latter gas into the diketone liquid.

13. The soldering method according to Claim 1, wherein said carboxylic acid vapor is mixed with said reducing gas or the mixture of said reducing gas and said inert gas by bubbling the latter gas into the carboxylic acid liquid.

14. The soldering method according to Claim 1, wherein the mixed vapor of said diketone and said carboxylic acid is mixed with said inert gas, said reducing gas or the mixture of said reducing gas and said inert gas by bubbling the latter gas into the diketone liquid and the carboxylic acid liquid.

15. The soldering method according to Claim 1, wherein said diketone vapor is mixed with said inert gas, said reducing gas or the mixture of said reducing gas and said inert gas by introducing the diketone liquid thereto to effect evaporation thereof.

16. The soldering method according to Claim 1, wherein said carboxylic acid vapor is mixed with said reducing gas or the mixture of said reducing gas and said inert gas by introducing the carboxylic acid liquid thereto to effect evaporation thereof.

17. The soldering method according to Claim 1, wherein the mixed vapor of said diketone and said carboxylic acid is mixed with said inert gas, said reducing gas or the mixture of said reducing gas and said inert gas by introducing said diketone liquid and said carboxylic acid liquid thereto to effect evaporation thereof.

18. The soldering method according to Claim 1, wherein said diketone vapor is mixed with said inert gas, said reducing gas or the mixture of said reducing gas and said inert gas by introducing the diketone liquid to an atmosphere of said inert gas, said reducing gas or the mixture of said reducing gas and said inert gas in a soldering furnace to effect evaporation thereof.

19. The soldering method according to Claim 1, wherein said carboxylic acid vapor is mixed with said reducing gas or the mixture of said reducing gas and said inert gas by introducing the carboxylic acid liquid to an atmosphere of said reducing gas or the mixture of said reducing gas and said inert gas in a soldering furnace to effect evaporation thereof.

20. The soldering method according to Claim 1, wherein the mixed vapor of said diketone and said carboxylic acid is mixed with said inert gas, said reducing gas or the mixture of said reducing gas and said inert gas by introducing the diketone liquid and the carboxylic acid liquid to an atmosphere of said inert gas, said reducing gas or the mixture of said reducing gas and said inert gas in a soldering furnace to effect evaporation thereof.

21. The soldering method according to Claim 1, wherein said diketone vapor is mixed with said inert gas, said reducing gas or the mixture of said reducing gas and said inert gas by condensing said diketone vapor onto a base-metal to form a liquid film or dew drops thereof, and heating the resulting base-metal having said diketone condensed thereon in the high temperature zone of a soldering furnace under the atmosphere of said inert gas, said reducing gas or the mixture of said reducing gas and said inert gas to effect reevaporation of said diketone.

22. The soldering method according to Claim 1, wherein said carboxylic acid vapor is mixed with said reducing gas or the mixture of said reducing gas and said inert gas by condensing said carboxylic acid vapor onto a base-metal to form a liquid film or dew drops thereof, and heating the resulting base-metal having said carboxylic acid condensed thereon in the high temperature zone of a soldering furnace under the atmosphere of said reducing gas or the mixture of said reducing gas and said inert gas to effect reevaporation of said carboxylic acid.

23. The soldering method according to Claim 1, wherein the mixed vapor of said diketone and said carboxylic acid is mixed with said inert gas, said reducing gas or the mixture. of said reducing gas and said inert gas by condensing the liquid mixture of said diketone and said carboxylic acid onto a base-metal to form a liquid film or dew drops thereof, and heating the resulting base-metal having said mixture of said diketone liquid and carboxylic acid liquid condensed thereon in the high temperature zone of a soldering furnace under the atmosphere of said inert gas, said reducing gas or the mixture of said reducing gas and said inert gas to effect reevaporation of said condensed liquid mixture of said diketone and said carboxylic acid.

24. The soldering method according to Claim 1, wherein said diketone vapor is mixed with said inert gas, said reducing gas or the mixture of said reducing gas and said inert gas by introducing the diketone liquid into a soldering furnace in the atmosphere of said inert gas, said reducing gas or the mixture of said reducing gas and said inert gas to form a liquid film or dew drops thereof on a base-metal, followed by evaporation.

25. The soldering method according to Claim 1, wherein said carboxylic acid vapor is mixed with said reducing gas or the mixture of said reducing gas and said inert gas by introducing the carboxylic acid liquid into a soldering furnace in the atmosphere of said reducing gas or the mixture of said reducing gas and said inert gas to form a liquid film or dew drops thereof on a base-metal, followed by evaporation.

26. The soldering method according to Claim 1, wherein the mixed vapor of said diketone and said carboxylic acid is mixed with said inert gas, said reducing gas or the mixture of said reducing gas and said inert gas by introducing the diketone liquid and the carboxylic acid liquid into a soldering furnace in the atmosphere of said inert gas, said reducing gas or the mixture of said reducing gas and said inert gas to form a liquid film or dew drops thereof on a base-metal, followed by evaporation thereof.

27. The soldering method according to Claim 1, wherein said diketone vapor is mixed with said inert gas, said reducing gas or the mixture of said reducing gas and said inert gas by condensing said diketone vapor onto a base-metal to form a liquid film or dew drops thereof and heating the resulting base-metal having said diketone condensed thereon in the high temperature zone of a soldering furnace under the atmosphere of any of said inert gas, said reducing gas or the mixture of said reducing gas and said inert gas, and carboxylic acid to effect reevaporation of said diketone.

28. The soldering method according to Claim 27, wherein said carboxylic acid vapor is obtained by bubbling said inert gas, said reducing gas or the mixture of said reducing gas and said inert gas into the carboxylic acid liquid.

29. The soldering method according to Claim 27, wherein said carboxylic acid vapor is obtained by introducing the carboxylic acid liquid into said inert gas, said reducing gas or the mixture of said reducing gas and said inert gas to effect evaporation thereof.

30. The soldering method according to Claim 27, wherein said carboxylic acid vapor is obtained by introducing the carboxylic acid liquid into said soldering furnace to effect evaporation of said liquid therein.

31. The soldering method according to Claim 21 or 27, wherein the formation of said diketone liquid film or dew drops on said base-metal is carried out by introducing said diketone vapor into said soldering furnace, and said diketone vapor is heated at least to the temperature of said base-metal before introduction to said soldering furnace.

32. The soldering method according to Claim 21 or 27, wherein the formation of said diketone liquid film or dew drops on said base-metal is carried out by admixing said diketone vapor to any of said inert gas, said reducing gas or said mixture of said reducing gas and said inert gas at least to corresponding saturated vapor pressure at the temperature at the inlet of said soldering furnace or at the temperature of said base-metal before introduction into said soldering furnace, and supplying the resulting gaseous mixture to said soldering furnace.

33. The soldering method according to Claim 22, wherein the formation of said carboxylic acid liquid film or dew drops on said base-metal is carried out by introducing said carboxylic acid vapor into said soldering furnace, and said carboxylic acid vapor is heated at least to the temperature at the inlet of said soldering furnace or at least to the temperature of said base-metal before introduction to said soldering furnace.

34. The soldering method according to Claim 22, wherein the formation of said carboxylic acid liquid film or dew drops on said base-metal is carried out by admixing said carboxylic acid vapor to any of said reducing gas or the mixture of said reducing gas and said inert gas at least to the corresponding saturated vapor pressure at the temperature at the inlet of said soldering furnace or at the temperature of said base-metal before introduction into said soldering furnace, and supplying the resulting gaseous mixture to said soldering furnace.

35. The soldering method according to Claim 23, wherein the formation of said liquid film or dew drops of the mixed vapor of said diketone and said carboxylic acid on said base-metal is carried out by introducing said diketone and said carboxylic acid into said soldering furnace, and said mixed vapor of said diketone and said carboxylic acid is heated at least to the temperature at the inlet of said soldering furnace or at least to the temperature of said base-metal before introduction into said soldering furnace.

36. The soldering method according to Claim 23, wherein the formation of said liquid film or dew drops of the liquid mixture of said diketone and said carboxylic acid on said base-metal is carried out by admixing the mixed vapor of said diketone and said carboxylic acid to said inert gas, said reducing gas or the gaseous mixture of said reducing gas and said inert gas at least to the corresponding saturated vapor pressure at the temperature at the inlet of said soldering furnace or at the temperature of said base-metal before introduction into said soldering furnace, and supplying the resulting gaseous mixture to said soldering furnace.

37. A soldering apparatus comprising:
a soldering furnace in which soldering is carried out in an atmosphere of a gaseous mixture of a diketone vapor and/or a carboxylic acid vapor, and an inert gas and/or a reducing gas (provided that the gaseous mixture of a carboxylic acid vapor and an inert gas is excluded);
a passage for supplying said diketone and/or carboxylic acid to said soldering furnace; and
a passage for supplying said inert gas and/or reducing gas to said soldering furnace.

38. The soldering apparatus according to Claim 37, wherein said passage for supplying said diketone and/or carboxylic acid to said soldering furnace is provided with a means for evaporating said diketone and/or carboxylic acid.

39. The soldering apparatus according to Claim 38, wherein said evaporation means is a bubbling tank for said diketone, which is connected to a passage for supplying said inert gas, said reducing gas or the mixture of said reducing gas and said inert gas to said soldering furnace.

40. The soldering apparatus according to Claim 38, wherein said evaporation means is a bubbling tank for said carboxylic acid, which is connected to a passage for supplying said reducing gas or the mixture of said reducing gas and said inert gas to said soldering furnace.

41. The soldering apparatus according to Claim 38, wherein said evaporation means is a bubbling tank for said diketone liquid and said carboxylic acid liquid, which is connected to a passage for supplying said inert gas, said reducing gas or the mixture of said reducing gas and said inert gas to said soldering furnace.

42. The soldering apparatus according to Claim 38, wherein said evaporation means is a mixer, connected to a passage for supplying said inert gas, said reducing gas or the mixture of said reducing gas and said inert gas to said soldering furnace, in which said diketone liquid introduced thereto is evaporated by heating and mixed with said gas.

43. The soldering apparatus according to Claim 38, wherein said evaporation means is a mixer, connected to a passage for supplying said inert gas, said reducing gas or the mixture of said reducing gas and said inert gas to said soldering furnace, in which said carboxylic acid liquid introduced thereto is evaporated by heating and mixed with said gas.

44. The soldering apparatus according to Claim 38, wherein said evaporation means is a mixer, connected to a passage for supplying said inert gas, said reducing gas or the mixture of said reducing gas and said inert gas to said soldering furnace, in which said diketone liquid and said carboxylic acid liquid introduced thereto are evaporated by heating and mixed with said gas.

45. The soldering apparatus according to Claim 37, wherein said passage for supplying said diketone and/or carboxylic acid to said soldering furnace is a passage for supplying said diketone and/or carboxylic acid in the liquid form into said soldering furnace.

46. The soldering apparatus according to Claim 37, wherein said passage for supplying said diketone and/or carboxylic acid to said soldering furnace is provided with a means for condensing said diketone and/or carboxylic acid onto a base-metal to form a liquid film or dew drops thereof.

47. The soldering apparatus according to Claim 46, wherein said means for forming a liquid film or dew drops is a nozzle for spraying said diketone and/or carboxylic acid.

48. The soldering apparatus according to Claim 46, wherein said means for forming a liquid film or dew drops is a bubbling unit for bubbling said diketone and/or carboxylic acid.
